Europäisches Patentamt

(19) European Patent Office

Office européen des brevets

(11) Numéro de publication : **0 280 615 B1**

(12) **FASCICULE DE BREVET EUROPEEN**

(45) Date de publication du fascicule du brevet :
23.10.91 Bulletin 91/43

(51) Int. Cl.⁵ : **A44C 21/00, B23P 11/00, B21K 25/00**

(21) Numéro de dépôt : 88400350.0

(22) Date de dépôt : 17.02.88

(54) **Procédé et machine pour la fabrication de flans monétaires métalliques avec insert constitué d'une bille qui est sertie dans le flan.**

(30) Priorité : 19.02.87 FR 8702158

(43) Date de publication de la demande :
31.08.88 Bulletin 88/35

(45) Mention de la délivrance du brevet :
23.10.91 Bulletin 91/43

(84) Etats contractants désignés :
AT BE CH DE ES GB GR IT LI NL SE

(56) Documents cités :
EP-A- 0 080 437
DE-A- 2 400 640
FR-A- 1 477 460
US-A- 3 261 481

(73) Titulaire : COMPTOIR LYON-ALEMAND -
LOUYOT
13 rue de Montmorency
F-75139 Paris Cédex 03 (FR)

Titulaire : ADMINISTRATION DES MONNAIES
ET MEDAILLES
11, Quai de Conti
F-75270 Paris Cedex 06 (FR)

(72) Inventeur : Guerlet, Jean-Paul
11, rue Paul Bert
F-75011 Paris (FR)
Inventeur : Barbotin, Bernard
25 bis, rue Léonard de Vinci
F-77330 Ozoir la Ferrieres (FR)
Inventeur : Plumail, Jean-Noel
11, Quai de Conti
F-75006 Paris (FR)
Inventeur : Reillac, Francis
9, av. Louis Debreuil
F-33600 Pessac (FR)

(74) Mandataire : Portal, Gérard et al
Cabinet Beau de Loménie 55, rue
d'Amsterdam
F-75008 Paris (FR)

## Description

La présente invention concerne essentiellement un procédé et une machine pour la fabrication de flans monétaires métalliques avec insert constitué d'une bille qui est sertie dans le flan.

Plus particulièrement, la présente invention concerne un procédé et une machine permettant l'obtention de flans monétaires constitués de deux matériaux de nature différente et éventuellement de couleur différente et cela en pouvant assurer des cadences très élevées de fabrication qui sont nécessaires eu égard aux quantités importantes à produire.

La lutte contre les fausses pièces de monnaie doit pouvoir se faire à deux niveaux : tout d'abord au niveau des échanges courants, visuellement, en donnant si possible à la pièce une singularité qui la distinguera des imitations, cette singularité devant être techniquement difficile à reproduire de façon à décourager les faussaires. Par ailleurs, une pièce doit aussi être identifiable précisément au niveau des sélecteurs modernes électroniques qui souvent font appel aux propriétés du matériau placé dans un champ électromagnétique.

A ce sujet, l'ensemble des critères de contrôles utilisés pour la reconnaissance automatique des pièces est fonction du type de sélecteur. Dans les sélecteurs les plus anciens, l'on utilise des critères géométriques tels que l'épaisseur minimale et maximale admissible, le diamètre, le contrôle du listel et un contrôle magnétique par aimant permanent. Dans les sélecteurs électroniques par contre, les contrôles dimensionnels d'épaisseur et diamètre effectués par des techniques optiques et électromagnétiques sont comparés à des valeurs mémorisées et le contrôle de la nature de l'alliage et du motif frappé est effectué par des bobines électromagnétiques, le signal étant à chaque fois comparé à des valeurs de référence.

L'on comprend alors aisément l'intérêt que peut présenter une pièce avec insert puisque la complexité plus importante rend la contrefaçon plus difficile et moins rentable, alors qu'un procédé industriel conçu pour réaliser de fortes cadences de fabrication amènera un surcoût faible en comparaison du flan seul. La même opération sera nécessairement bien plus onéreuse pour de petites quantités et avec des moyens artisanaux dans le cas de la contrefaçon.

Enfin, si les matériaux utilisés sont de couleur différente, la reconnaissance rapide visuelle sera assurée.

La sélection électronique en monnayeur sera beaucoup plus précise, l'association de deux matériaux permettra d'avoir une réponse électromagnétique beaucoup plus fine.

Les fabricants de monnaie, de façon à limiter les contrefaçons, se sont intéressés à la fabrication de pièces de type composite utilisant un ou plusieurs matériaux dans la même pièce, de façon à rendre plus pointue la sélectivité en machine automatique. C'est ainsi que le brevet allemand DE-OS-2644018 jouant sur les propriétés magnétiques des différents matériaux constitutifs d'une pièce, décrit un grand nombre d'assemblages théoriques faisant appel à des techniques très variées, mais il est clair que tout cela est resté au niveau de l'idée puisque aucune indication pratique n'est donnée pour la réalisation de ces modèles. Ce manque d'information prend toute son importance quand on sait qu'il est essentiel que le procédé retenu soit capable de conduire à des cadences très élevées de fabrication, à un coût très bas.

Des procédés d'obtention de structures composites de pièces ont déjà été proposés, ainsi le brevet européen 0086507 décrit un procédé basé sur la technique d'un amenage de fil qui est tronçonné puis serti dans une perforation. Les inserts ainsi formés sont de petite taille, il en existe plusieurs par flan et l'on joue essentiellement sur les différences de propriétés magnétique des matériaux pour favoriser la sélection en machine automatique des pièces.

Ce procédé semble être d'une mise en oeuvre industrielle délicate. En effet, s'il se veut économique, il doit comme dans tout procédé de découpe monétaire, permettre de produire à chaque coup de presse, un grand nombre de flans, entre 7 et 12 généralement, et à cadence élevée.

D'après le procédé, chaque flan comporte plusieurs tronçons de fil rivetés.

La grosse difficulté de ce procédé réside, à notre sens, dans la distribution du fil. Il faut par exemple, pour un flan comportant trois lopins, amener de 21 à 36 fils dans l'outil à suivre puis les tronçonner et les riveter. Ce nombre élevé de fils à distribuer conduit à avoir autant d'amenages mécaniques dont il faut contrôler l'avance, ce qui peut entraîner un risque d'arrêts intempestifs important, donc un faible taux d'occupation de la machine.

Même avec des fils rigoureusement calibrés et dressés, il existe néanmoins des arrêts de fabrication grévant le coût de revient. Un tel procédé n'est intéressant économiquement que pour un faible volume de pièces, par exemple en électrotechnique.

Par ailleurs, après l'amenage du fil, il faut tronçonner et riveter les fils à grande cadence pour atteindre une production journalière élevée.

Ce dernier paramètre conjugué avec la difficulté de distribution multiple, nous semble devoir conduire à un coût de production élevé.

Plus récemment, le brevet européen EP-A-0080437 décrit un procédé de fabrication de flans monétaires métalliques avec insert, comprenant la réalisation d'au moins un trou dans un flan monétaire métallique, l'amenée d'un insert métallique de dimensions appropriées ayant des caractéristiques physiques différentes du flan, en particulier des caractéristiques ferromagnétiques différentes, ou une couleur différente, dans chaque trou, et l'écrasement dudit insert de préférence par estampage, pour le solidariser dudit flan et remplir sensiblement complètement le volume dudit trou. Ainsi, ce document décrit une pièce composite bicolore avec deux matériaux mais il est clair que, d'une part, la géométrie de l'assemblage et le procédé utilisé pour son obtention sont très différents de la présente invention. En effet, le flan doit être pourvu de dents, ce qui complique la fabrication. En outre, le sertissage final de la pièce centrale dans la couronne s'effectue au moment de la frappe de la pièce de monnaie proprement dite, ce qui exclut toute possibilité de traitement thermique de diffusion ultérieur généralement nécessaire à une bonne consolidation de l'assemblage. Ce type de pièce est par ailleurs déjà décrit dans le brevet DE-OS 2644018.

Dans le document DE-2400640, on décrit la fabrication de dispositifs électriques assurant un contact électrique adéquat comprenant l'écrasement élastique d'une bille dans un orifice. Il s'agit d'un domaine technique très éloigné de celui de l'invention, que l'homme du métier des pièces de monnaie ne connaît pas et n'a pas à connaître en raison des problèmes techniques totalement différents qui se posent à lui.

D'ailleurs, ceci est démontré par le fait que ce document a été publié en 1975 et les solutions préconisées dans les documents de la technique des pièces de monnaies précités DE-2644018, EP-0080437 ou EP-0086507, vont à l'opposé de la solution de DE-2400640.

On préconise également dans DE-2400640 le passage d'un courant électrique pendant la déformation de la bille (revendication 3).

Enfin, une autre confirmation vient du fait que, selon ce document DE-2400640, pour assurer le contact électrique nécessaire, on doit utiliser une bille qui a une dimension telle que son volume est bien plus grand que celui du trou à remplir contrairement au cas des pièces de monnaies.

La présente invention a donc pour but de résoudre le problème technique consistant en la fourniture d'une solution permettant l'obtention de flans monétaires à inserts d'une grande simplicité, évitant la technique de rivetage antérieure, utilisant des flans et des inserts de géométrie simple, qui sont assemblés de manière sûre par la technique simple d'estampage.

La présente invention a encore pour but de fournir une solution permettant d'augmenter les cadences de fabrication d'une manière radicale tout en évitant d'augmenter le nombre de rebuts.

Ces problèmes techniques sont résolus pour la première fois par la présente invention.

Pour ce faire, selon la présente invention, on utilise, à titre d'insert, un élément essentiellement sphérique, tel qu'une bille qui est amenée par simple roulage dans un trou réalisé dans le flan avant d'être frappée pour réaliser un écrasement remplissant sensiblement le trou.

Ainsi, selon un premier aspect, la présente invention fournit un procédé de fabrication de flans monétaires métalliques avec insert, comprenant :

la réalisation d'au moins un trou dans un flan monétaire métallique ;

l'amenée d'un insert métallique de dimensions appropriées et ayant des caractéristiques physiques différentes dudit flan, en particulier des caractéristiques ferromagnétiques différentes, ou une couleur différente, dans chaque trou, et

l'écrasement dudit insert de préférence par estampage pour le solidariser dudit flan et remplir sensiblement complètement le volume dudit trou;

caractérisé en ce qu'on utilise comme insert métallique un élément essentiellement sphérique.

Avantageusement, l'élément essentiellement sphérique est constitué par une bille dont le diamètre est de préférence compris entre environ 1,4 et 1,6 fois l'épaisseur du flan. Encore de préférence, le diamètre de la bille est sensiblement égal à 1,5 fois l'épaisseur du flan.

Suivant un mode de réalisation préféré, on réalise un trou unique central traversant dans le flan précité.

Selon une autre caractéristique de l'invention, le diamètre de l'élément essentiellement sphérique est légèrement supérieur au diamètre du trou du flan, de préférence supérieur seulement de quelques microns ou dizaines de microns au diamètre du trou, avantageusement est supérieur d'environ 10 à environ 20 microns au diamètre du trou.

Selon un mode de réalisation préféré du procédé de l'invention, on amène tout d'abord l'élément essentiellement sphérique en emmanchement serré dans le trou précité du flan, de sorte que le centre géométrique dudit élément essentiellement sphérique appartienne au plan passant par le milieu de l'épaisseur du flan, puis on réalise l'écrasement de l'élément essentiellement sphérique par un procédé mécanique, avantageusement par estampage, de façon à ce que le volume de l'élément essentiellement sphérique vienne épouser le volume du trou en le remplissant sensiblement exactement.

Selon une autre caractéristique préférée du procédé selon l'invention, après écrasement de l'élément essentiellement sphérique, on soumet le flan avec son insert à un traitement thermique de diffusion pour consolider l'assemblage flan-insert.

Selon un deuxième aspect, la présente invention concerne aussi une machine de fabrication de flans monétaires métalliques avec insert, comprenant :

des moyens d'amenée de flans monétaires métalliques comportant au moins un trou ;

des moyens d'amenée d'un insert métallique de dimensions appropriées et ayant des caractéristiques différentes du flan, en particulier des caractéristiques ferromagnétiques différentes, ou une couleur différent, dans chaque trou, et

des moyens de solidarisation de l'insert amené dans le trou avec ledit flan, comprenant des moyens d'écrasement réalisant l'écrasement de l'élément, de préférence par frappage, de sorte que l'élément ainsi écrasé soit solidarisé audit flan et remplisse sensiblement complètement le volume dudit trou, caractérisé en ce que l'insert métallique est constitué par un élément essentiellement sphérique, tel qu'une bille, tandis que ledit trou est avantageusement essentiellement cylindrique.

Selon un mode de réalisation préféré de la machine selon l'invention, les moyens d'amenée d'inserts comprennent des moyens de distribution d'un insert l'un après l'autre au travers d'un orifice de distribution situé en coïncidence avec le trou du flan précité.

De préférence, les moyens de distribution comprennent un chariot monté déplaçable horizontalement en translation entre deux positions extrêmes, une première position extrême avancée interdisant la distribution d'un insert et une deuxième position extrême rétractée découvrant l'orifice de distribution qui est situé en-dessous du plan dudit chariot en étant de préférence défini par une plaque servant de plan d'appui et de guidage en translation du chariot, ledit flan étant situé en dessous de ladite plaque.

Avantageusement, la face avant du chariot sert de butée d'arrêt d'avancement des inserts dont les premiers se trouvent sensiblement dans l'axe de translation du chariot.

Selon une autre caractéristique préférée de la machine selon l'invention, celle-ci est caractérisée en ce que les moyens d'amenée des inserts comprennent des moyens de blocage en position de l'insert suivant. Avantageusement, les moyens de blocage comprennent un doigt actionné par un dispositif formant came venant s'appliquer contre l'insert suivant.

Selon une autre caractéristique de la machine suivant l'invention, celle-ci est caractérisée en ce qu'elle comprend des moyens de présertissage de l'insert après sa distribution alors que le chariot est dans sa deuxième position rétractée.

Selon un mode de réalisation actuellement préféré, les moyens de présertissage comprennent un doigt supporté par un dispositif support, actionné en déplacement vertical de manière à faire passer ledit doigt au travers de l'orifice de distribution de l'insert. Avantageusement, les moyens de présertissage comprennent des moyens formant came agissant, lors du mouvement de descente du moyen support, sur le chariot pour l'amener en deuxième position rétractée et libérant le chariot lors du mouvement de remontée.

Selon une autre caractéristique de la machine selon l'invention, celle-ci est caractérisée en ce qu'elle comprend des moyens de réception et de maintien des flans, se déplaçant selon un circuit fermé successivement d'un poste de distribution de flans à un poste de distribution d'inserts puis à un poste de sertissage et enfin à un poste d'évacuation des flans avec leurs inserts sertis.

De préférence, les moyens de réception et de maintien des flans sont réalisés sur un barillet monté à rotation selon un axe de rotation vertical, de sorte qu'avantageusement le poste de distribution de flans et le poste de sertissage des flans avec leurs inserts sont alignés en étant diamétralement opposés.

On comprend ainsi que l'on peut réaliser des flans monétaires à inserts à une cadence très élevée à l'aide de moyens techniques et d'opérations techniques très simples, d'un coût très faible, d'une manière tout à fait sûre évitant ou limitant la présence de rebuts.

Il suffira à ce sujet que la bille ainsi que le trou central du flan soient parfaitement propres et exempts de graisse ou de toute huile de lubrification, le trou central du flan devant être exempt de bavures de découpes, ce qui est aisément réalisable au niveau industriel, pour l'obtention de flans à inserts de caractéristiques pratiquement parfaites. En outre, un avantage considérable de l'invention réside dans le fait qu'il est très aisé d'obtenir des billes en tout matériau apte à la déformation plastique et cela dans des machines à grandes cadences.

On peut de ce fait modifier aisément le métal ou l'alliage constituant la bille, en utilisant des matériaux bi ou trimétalliques, en utilisant des matériaux contenant dans la matrice une phase finement dispersée ayant une propriété particulière. Par ailleurs, compte tenu de la symétrie de la bille, les problèmes de distribution se résolvent facilement, le positionnement de la bille dans le trou pouvant se faire au hasard, ce qui représente un avantage technique tout à fait déterminant, inattendu et non évident pour l'homme du métier.

D'autres buts, caractéristiques et avantages de l'invention apparaîtront clairement à la lumière de la description explicative qui va suivre, faite en référence aux dessins annexés d'un mode de réalisation actuellement préféré d'une machine selon l'invention dont seuls les moyens essentiels sont représentés.

Dans les dessins :

la figure 1 représente une vue schématique de dessus des moyens essentiels d'une machine selon l'invention, qui comporte selon l'exemple représenté, un barillet rotatif selon un axe de rotation vertical ;

la figure 2 représente une vue en élévation de la machine représentée à la figure 1, avec coupe partielle, montrant le poste de distribution des flans et le poste de solidarisation des inserts avec les flans ;

la figure 3 représente une vue en élévation, avec coupe partielle, du poste de distribution des inserts ;

la figure 4 représente une vue en coupe selon la ligne de trace IV-IV de la figure 3 et montrant les moyens de blocage de l'insert suivant ;

la figure 5 représente une vue en perspective similaire à celle de la figure 3, montrant l'insertion d'un insert dans le trou d'un flan et son présertissage dans le flan ;

la figure 6 représente une vue en coupe selon la ligne de trace VI-VI de la figure 5, montrant les moyens de blocage en position de blocage de l'insert suivant ;

la figure 7 représente en coupe transversale axiale un flan monétaire avec son insert tel qu'obtenu selon le procédé selon deux variantes de réalisation, une première variante en trait plein selon laquelle le volume de l'insert est légèrement supérieur au volume du trou du flan, et une deuxième variante en pointillé selon laquelle le volume de l'insert est légèrement inférieur au volume du trou du flan, les proportions n'étant pas respectées pour une meilleure compréhension.

En référence aux dessins, une machine selon l'invention pour la fabrication de flans monétaires représentés par le numéro de référence général 1 (figure 7), avec inserts représentés par le numéro de référence général 2 (figure 7), comprend :

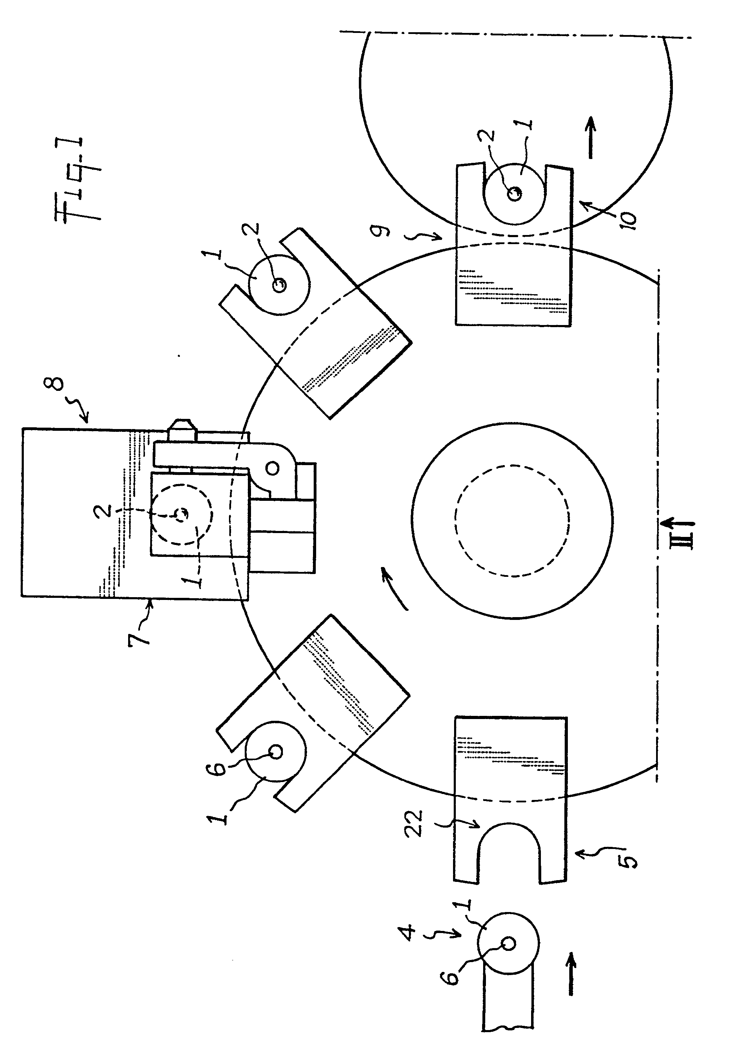

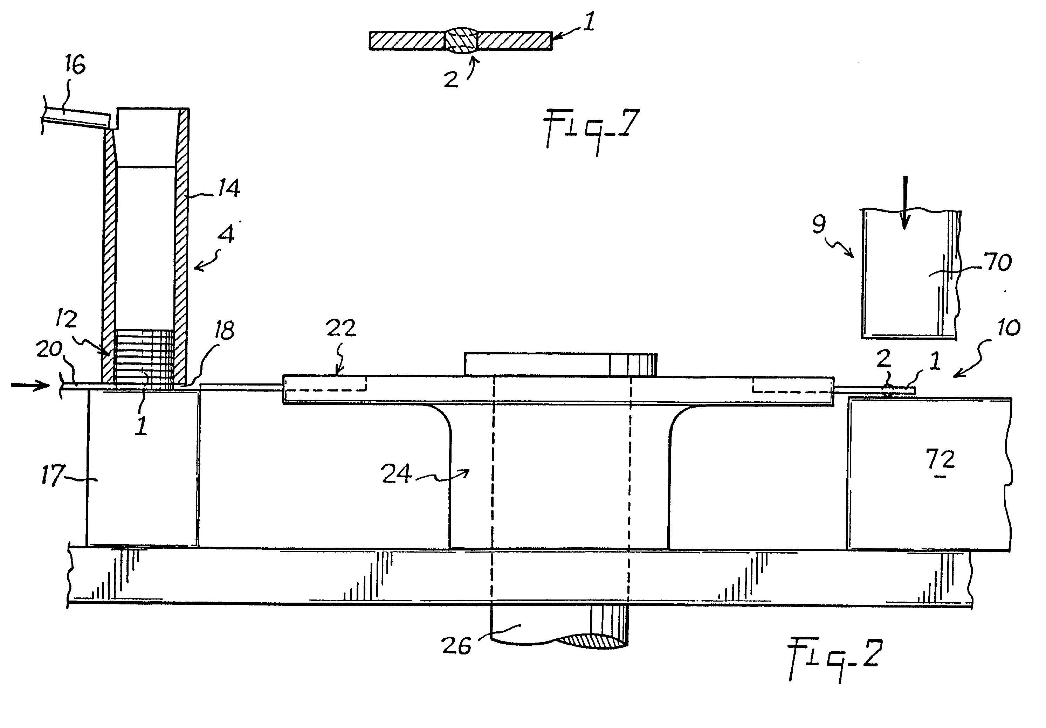

des moyens 4 d'amenée de flans monétaires métalliques 1, qui sont clairement visibles aux figures 1 et 2 comportant au moins un trou 6 traversant qui est ici réalisé unique et central ;

des moyens 8 d'amenée des inserts (tels que 2, clairement visibles aux figures 1, 3 à 6) habituellement métalliques de dimensions appropriées ayant des caractéristiques physiques différentes du flan 1, en particulier des caractéristiques ferromagnétiques différentes, ou une couleur différente. Ces moyens 8 permettent d'amener l'insert 2 dans chaque trou 6 du flan 1, comme cela est clairement visible aux figures 3 à 6 ; et

des moyens 10 de solidarisation de l'insert 2 amené dans le trou 6 avec le flan 1.

Selon la présente invention, l'insert métallique 2 est constitué par un élément essentiellement sphérique tel qu'une bille, tandis que le trou 6 du flan 1 est avantageusement essentiellement cylindrique. En outre, les moyens de solidarisation 10 comprennent des moyens d'écrasement réalisant l'écrasement de l'élément essentiellement sphérique 2, de préférence par des moyens mécaniques, par exemple par estampage, de sorte que l'élément essentiellement sphérique ainsi écrasé soit solidarisé au flan 1 et remplisse sensiblement complètement le volume du trou 6, comme cela se conçoit bien à partir de la considération de la figure 7.

Selon l'invention, l'élément essentiellement sphérique, qui est constitué par une bille, présente un diamètre qui est compris entre environ 1,4 et environ 1,6 fois l'épaisseur du flan. Encore de préférence, le diamètre de la bille 2 est sensiblement égal à 1,5 fois l'épaisseur du flan 1.

Avantageusement, le diamètre de l'élément essentiellement sphérique est légèrement supérieur au diamètre du trou du flan, et de préférence est supérieur seulement de quelques microns à quelques dizaines de microns au diamètre du trou 6 du flan 1, encore de préférence est supérieur d'environ 10 à environ 20 microns. Comme indiqué précédemment, l'insert, c'est-à-dire l'élément essentiellement sphérique tel qu'une bille, est constitué d'un matériau métallique différent de celui du flan 1 et il peut être d'une couleur qui le différencie de celle du flan. Avantageusement, il est également apparent sur les deux faces du flan, comme clairement visible à la figure 7, ce qui permet aussi une reconnaissance visuelle. En particulier, les deux matériaux utilisés pour réaliser le flan 1 et l'insert 2 ont des propriétés magnétiques différentes, ce qui permet une reconnaissance en appareil de sélection automatique. La bille peut aussi être constituée d'un matériau bi- ou trimétallique.

Selon le mode de réalisation de la machine selon l'invention représentée dans les dessins, en particulier à la figure 2, il est à observer que les flans 1 préalablement découpés avec leur trou central 6 sont amenés en deux temps, tout d'abord d'un container (non représenté) jusqu'à un bol d'alimentation 14, par exemple au moyen d'un tapis 16, de manière à réaliser un empilement des flans 1 dans le bol d'alimentation 14, ici vertical. Le bol d'alimentation 14 se termine à une distance prédéterminée d'une embase 17, qui est sensiblement égale à l'épaisseur du flan 1, de manière à définir une ouverture 18 de distribution des flans 1.

En référence à la figure 2, on voit que les flans 1 sont distribués grâce à la présence de moyens de poussée 20 réalisant l'avancement d'un seul flan 1 jusqu'à des moyens 22 de réception et de maintien des flans 1.

Selon un mode de réalisation représenté, les moyens 22 de réception et de maintien des flans 1 se déplacent selon un circuit fermé, de préférence en faisant partie d'un barillet 24 de distribution de manière à passer successivement du poste de distribution 5 de flans 1, à un poste 7 de distribution d'inserts 2, à un poste de sertissage 9 et enfin à un poste d'évacuation (non représenté) des flans avec leurs inserts sertis.

Avantageusement, le barillet 24 est monté à rotation selon un arbre de rotation vertical 26, ce qui permet par exemple, d'avoir le poste 5 d'amenée des flans 1 et le poste 9 de sertissage alignés, en étant diamétralement opposés relativement au barillet 24 (voir figures 1 et 2).

On comprend que le bol d'alimentation 14 réalise une régularisation de l'alimentation en flans 1.

Les inserts 1 distribués aux moyens de réception et de maintien 22 se déplacent alors dans le plan horizontal jusqu'au poste 7.

A ce poste 7, les moyens 8 d'amenée des inserts métalliques 2, représentés aux figures 3 à 6, comprennent des moyens de distribution 30, par exemple comprenant une conduite 32 coudée dans laquelle sont empilés les inserts, ici constitués par des billes 2, de manière à avoir une partie supérieure 32a disposée sensiblement verticalement et une partie inférieure 32b débouchant sensiblement horizontalement, en permettant ainsi de distribuer les inserts 2 l'un après l'autre au travers d'un orifice 34 situé en coïncidence avec le trou 6 du flan 1 se trouvant au poste 7.

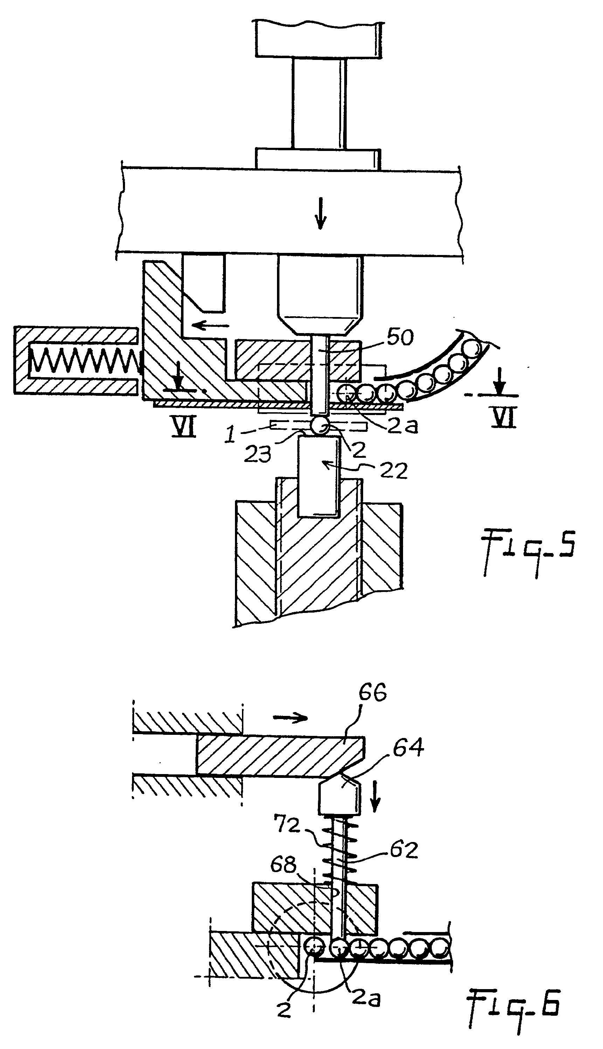

Selon le mode de réalisation représenté, les moyens de distribution 30 comprennent un chariot 36 monté déplaçable horizontalement en translation entre deux positions extrêmes, une première position extrême avancée, représentée à la figure 3, interdisant la distribution d'un insert 2, et une deuxième position extrême rétractée, représentée à la figure 5, découvrant l'orifice 34 qui est situé en dessous du plan du chariot 36. Cet orifice 34 est de préférence défini par une plaque 38 servant de plan d'appui et de guidage en translation du chariot 36, le flan 1 étant situé au-dessous du plan de la plaque 38 comme clairement visible aux figures 3 et 5.

On peut observer que la face avant 36a du chariot 36 sert de butée d'arrêt d'avancement des inserts 2 dont les premiers tels que 2, 2a, se trouvent sensiblement dans l'axe de translation du chariot 36.

En outre, on observera que le chariot 36 est repoussé en permanence dans sa première position extrême avancée à l'aide de moyens de poussée unidirectionnels élastiques 40, tels qu'un ressort.

Le chariot est amené dans sa deuxième position extrême rétractée de la figure 5 grâce à la présence d'un épaulement vertical 42 formant un élément suiveur de came 44 coopérant avec un élément formant came 46 solidaire de moyens de présertissage 48 qui sont maintenant décrits.

Les moyens de présertissage 48 comprennent un doigt 50 supporté par un dispositif support 52, 54, dont une partie (54) est commune avec les moyens formant came 46. Les moyens de présertissage 48 sont actionnés en déplacement vertical alternatif de manière à faire passer le doigt 50, qui est guidé en translation dans un orifice 56 défini dans un élément de guidage 58, au travers de l'orifice 34 de distribution de l'insert 2 jusqu'à ce que ce doigt 50 vienne prendre appui contre l'insert 2 qui est tombé dans le trou central 6 du flan 1, et qui repose sur la surface supérieure 23 des moyens 22 d'appui et de maintien, formant enclume, comme représenté à la figure 5.

Ainsi, la position représentée à la figure 5 représente une position de présertissage qui permet, grâce à l'action du doigt 50 de positionner précisément l'insert ou bille 2 dans le trou central 6 du flan 1, de sorte que le centre géométrique de l'insert 2, ici une bille, appartienne au plan passant par le milieu de l'épaisseur du flan 1. On réalise ainsi un blocage de l'insert 2 par présertissage, correspondant à un emmanchement serré.

On observera que lors du mouvement de descente des moyens de présertissage 48, les moyens formant came 46 sont venus tout d'abord en contact avec les moyens suiveurs de came 44 du chariot 36, de sorte que le chariot 36 est tout d'abord amené dans sa deuxième position rétractée de manière à permettre la distribution d'un insert 2 avant que le doigt 50 ne vienne occuper la position préalablement occupée par la partie avant 36a du chariot 36.

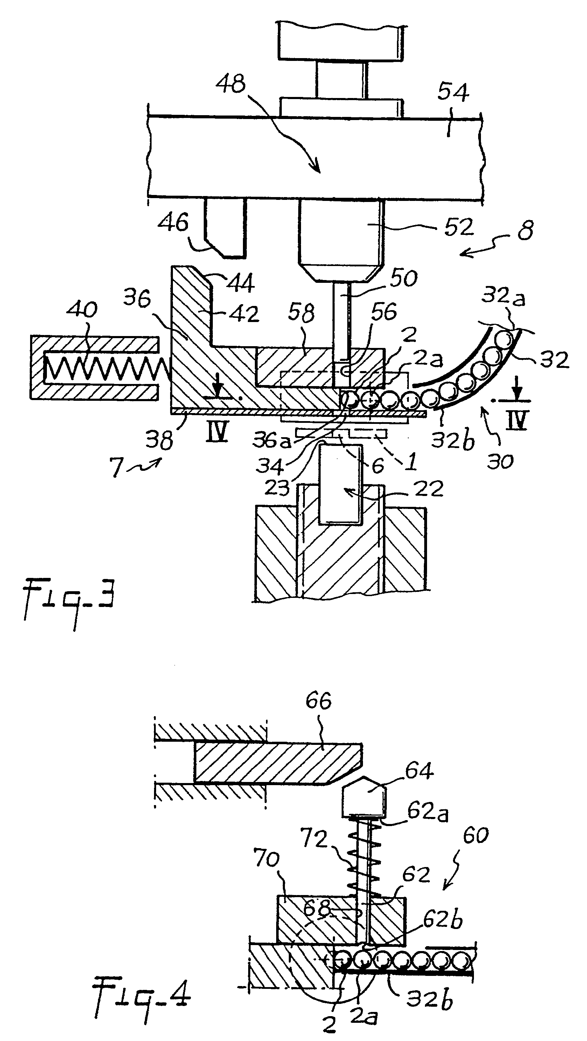

Naturellement, et afin d'éviter que le doigt 50 ne vienne toucher l'insert suivant 2a qui s'avance naturellement sous l'effet de la pression exercée par les inserts suivants dans la conduite 32, on prévoit avantageusement que la machine selon l'invention comprend encore des moyens 60, représentés aux figures 4 et 6, de blocage en position de l'insert suivant 2a.

Ces moyens de blocage 60 comprennent, par exemple, un doigt 62 dont la partie arrière 62a opposée à la partie avant de blocage 62b comporte des moyens suiveurs de came 64 coopérant avec des moyens formant came 66.

Le doigt 62 est monté déplaçable en translation dans un orifice 68 défini dans un élément de guidage 70 disposé latéralement relativement à la partie avant de la conduite 32b. La position rétractée du doigt 62 est représentée à la figure 4, tandis que la position avancée de blocage est représentée à la figure 6. Des moyens de rappel élastique 72 du doigt 62 sont aussi nécessaires.

On comprend que juste avant ou simultanément au mouvement de descente des moyens de présertissage 48, les moyens de blocage 60 sont mis en action de manière à ne permettre la distribution que d'un seul insert 2 et à bloquer l'insert suivant 2a.

Suite au présertissage réalisé avantageusement au poste 7 de distribution des inserts 2, le flan 1 avec son insert préserti 2 est amené au poste 9 de sertissage proprement dit.

Les moyens de sertissage 10, plus généralement dénommés moyens de solidarisation, comprennent des moyens d'écrasement 70, 72 coopérants, réalisant l'écrasement de l'insert 2 préserti dans le trou 6 du flan 1, de manière à ce que l'insert 2 occupe sensiblement complètement le volume du trou 6 du flan 1, comme cela est visible à la figure 7. Ces moyens d'écrasement 70, 72 sont constitués par des outils d'estampage classiques réalisant un écrasement de l'insert 2 de part et d'autre du flan 1. La force habituellement appliquée est très faible (environ 1000 kgf). Cette force peut être modulée pour obtenir plus ou moins de relief de l'insert 2 par rapport au flan 1. Elle dépend bien évidemment de la nature du matériau constitutif de l'insert 2, c'est-à-dire de ses propriétés mécaniques.

On réalise ainsi un assemblage mécanique au poste 9.

Après cet assemblage mécanique, les flans peuvent être cordonnés avec les appareillages habituels.

De préférence, on réalise encore une étape finale de traitement thermique qui permet non seulement d'obtenir une faible dureté exigée par la frappe, mais aussi une diffusion pour consolider l'assemblage ou la solidarisation entre l'insert 2 et le flan 1.

Les paramètres du traitement de diffusion (température, durée) sont fonctions des matériaux utilisés et sont bien connus à l'homme de l'art. On comprend ainsi que cette machine permet de réaliser le procédé préalablement décrit afin d'aboutir aux avantages techniques déterminants précédemment énoncés.

D'autre part, l'invention comprend tous les moyens constituant des équivalents techniques des moyens décrits ainsi que leurs diverses combinaisons.

En outre, diverses variantes sont possibles sans sortir de son cadre. Par exemple, on peut prévoir entre le poste 5 de distribution des flans 1 et le poste 7 de distribution des inserts 2 un contrôle pour vérifier la présence d'un insert 1. De même entre le poste 7 et le poste 9 on peut prévoir un contrôle, par exemple mécanique, repérant la présence d'un insert 2 dans le trou 6 du flan 1.

Ces moyens de contrôle peuvent être reliés à des alarmes et/ou à des moyens d'arrêt de la machine afin de permettre une vérification et éventuellement une réparation.

**Revendications**

1. Procédé de fabrication de flans monétaires métalliques avec insert, comprenant :
   la réalisation d'au moins un trou (6) dans un flan monétaire (1) métallique ;
   l'amenée d'un insert (2) métallique de dimensions appropriées et ayant des caractéristiques physiques différentes dudit flan (1), en particulier des caractéristiques ferromagnétiques différentes, ou une couleur différente, dans chaque trou (6) ; et
   l'écrasement dudit insert (2) de préférence par estampage pour le solidariser dudit flan (1) et remplir sensiblement complètement le volume dudit trou (6) ;
   caractérisé en ce qu'on utilise comme insert (2) métallique un élément essentiellement sphérique.

2. Procédé selon la revendication 1, caractérisé en ce que l'élément essentiellement sphérique (2) est une bille dont le diamètre est compris entre environ 1,4 et environ 1,6 fois l'épaisseur du flan (1).

3. Procédé selon la revendication 1 ou 2, caractérisé en ce que le diamètre de la bille est sensiblement égal à 1,5 fois l'épaisseur du flan (1).

4. Procédé selon l'une quelconque des revendications 1 à 3, caractérisé en ce qu'on réalise un trou unique central (6) traversant dans le flan précité (1).

5. Procédé selon l'une quelconque des revendications 1 à 4, caractérisé en ce que le diamètre de l'élément essentiellement sphérique est légèrement supérieur au diamètre du trou (6) du flan (1), de préférence est supérieur seulement de quelques microns à quelques dizaines de microns au diamètre du trou (6), et avantageusement est supérieur d'environ 10 à environ 20 microns au diamètre du trou (6).

6. Procédé selon l'une quelconque des revendications 1 à 5, caractérisé en ce qu'on applique sur l'élément essentiellement sphérique (2) une force suffisante pour légèrement l'écraser et le positionner de façon à ce que son centre géométrique soit dans le plan médian passant par le milieu de l'épaisseur du flan (1), l'élément essentiellement sphérique (2) étant ensuite écrasé pour venir remplir sensiblement complètement le trou (6) du flan (1).

7. Procédé selon l'une quelconque des revendications 1 à 6, caractérisé en ce que, après écrasement de l'élément essentiellement sphérique (2), on soumet le flan (1) avec son insert (2) à un traitement thermique de diffusion pour consolider l'assemblage flan (1)-insert (2).

8. Machine de fabrication de flans monétaires métalliques avec insert, comprenant :
   des moyens (4) d'amenée de flans (1) monétaires métalliques comportant au moins un trou (6) ;
   des moyens (8) d'amenée d'un insert (2) métallique de dimensions appropriées et ayant des caractéristiques différentes du flan, en particulier des caractéristiques ferromagnétiques différentes, ou une couleur différente, dans chaque trou, et
   des moyens (10) de solidarisation de l'insert amené dans le trou avec ledit flan, comprenant des moyens d'écrasement (70, 72) réalisant l'écrasement de l'élément, de préférence par frappage, de sorte que l'élément ainsi écrasé soit solidarisé audit flan et remplisse sensiblement complètement le volume dudit trou,
   caractérisé en ce que l'insert métallique est constitué par un élément essentiellement sphérique, tel qu'une bille, tandis que ledit trou est avantageusement essentiellement cylindrique.

9. Machine selon la revendication 8, caractérisée en ce que les moyens (8) d'amenée des inserts comprennent des moyens (30) de distribution d'un insert (2) l'un après l'autre au travers d'un orifice de distribution (34) situé en coincïdence avec le trou (6) du flan (1).

10. Machine selon la revendication 9, caractérisée en ce que les moyens de distribution (30) comprennent un chariot (36) monté déplaçable horizontalement en translation entre deux positions extrêmes, une première position extrême avancée (figure 3) interdisant la distribution d'un insert (2) et une deuxième position extrême rétractée (figure 5) découvrant ledit orifice (34) qui est situé en dessous du plan du chariot (36) en étant de préférence défini par une plaque (38) servant de plan d'appui et de guidage en translation du chariot (36) ; ledit flan (1) étant situé en dessous de la plaque (38).

11. Machine selon la revendication 10, caractérisée en ce que la face avant (36a) du chariot (36) sert de butée d'arrêt d'avancement des inserts (2) dont les premiers se trouvent sensiblement dans l'axe de translation du chariot (36).

12. Machine selon l'une quelconque des revendications 8 à 11, caractérisée en ce que les moyens (8) d'amenée des inserts (2) comprennent des moyens (60) de blocage en position de l'insert suivant (2a).

13. Machine selon la revendication 12, caractérisée en ce que les moyens de blocage (60) comprennent un doigt (62) actionné par un dispositif formant came (66), venant s'appliquer contre l'insert suivant (2a).

14. Machine selon l'une quelconque des revendications 10 à 13, caractérisée en ce qu'elle comprend des moyens (48) de présertissage de l'insert (2) après sa distribution alors que le chariot (36) est dans sa deuxième position rétractée (figure 5).

15. Machine selon la revendication 14, caractérisée en ce que les moyens de présertissage (48) comprennent un doigt (50) supporté par un dispositif support (52, 54) actionné en déplacement vertical alternatif de manière à faire passer le doigt (50) au travers de l'orifice (34) de distribution de l'insert.

16. Machine selon la revendication 15, caractérisée en ce que les moyens de présertissage (48) comprennent des moyens formant came (46) agissant lors du mouvement de descente du moyen support (52, 54) sur le chariot (36) pour l'amener dans la deuxième position rétractée précitée (figure 5) et libérer le chariot (36) lors du mouvement de remontée (figure 3).

17. Machine selon l'une quelconque des revendications 8 à 16, caractérisée en ce qu'elle comprend une pluralité de moyens (22) de réception et de maintien des flans (1), se déplaçant selon un circuit fermé, successivement d'un poste (5) de distribution des flans (1) à un poste (7) de distribution d'insert (2), à un poste de sertissage (9) et enfin à un poste d'évacuation des flans avec les inserts (2) sertis, de préférence les moyens (22) font partie d'un barillet (24) monté à rotation selon un axe vertical (26).

**Patentansprüche**

1. Verfahren zur Herstellung von metallischen Münzplatten mit Einsatz, umfassend :
die Ausführung von zumindest einem Loch (6) in einer metallischen Münzplatte (1) ;
die Einführung eines Metalleinsatzes (2) geeigneter Abmessungen mit anderen physikalischen Kennzeichen als die Münzplatte (1), insbesondere anderen ferromagnetischen Kennzeichen, oder einer unterschiedlichen Färbung, in jedes Loch (6) ; und
die Quetschung des Einsatzes (2), vorzugsweise durch Preßdruck, zum Verbinden desselben mit der Münzplatte (1) und im wesentlichen vollständigen Ausfüllen des Volumens des Lochs (6) ; dadurch gekennzeichnet, daß man als Metalleinsatz (2) ein im wesentliches kugelförmiges Element verwendet.

2. Verfahren nach Anspruch 1, dadurch gekennzeichnet, daß das im wesentlichen kugelförmige Element (2) eine Kugel ist, deren Durchmesser dem etwa 1,4- bis etwa 1,6-fachen der der Dicke der Münzplatte (1) entspricht.

3. Verfahren nach Anspruch 1 oder 2, dadurch gekennzeichnet, daß der Durchmesser der Kugel im wesentlichen gleich 1,5 mal die Dicke der Münzplatte (1) ist.

4. Verfahren nach einem der Ansprüche 1 bis 3, dadurch gekennzeichnet, daß man ein einziges zentrales, durch die Münzplatte (1) gehendes Loch (6) ausführt.

5. Verfahren nach einem der Ansprüche 1 bis 4, dadurch gekennzeichnet, daß der Durchmesser des im wesentlichen kugelförmigen Elements etwas größer als der Durchmesser des Lochs (6) der Münzplatte (1) ist, vorzugsweise nur um einige µm bis zu einigen -zig µm größer als der Durchmessers des Lochs (6) ist und vorteilhafterweise um etwa 10 bis etwa 20 µm größer als der Durchmesser des Lochs (6) ist.

6. Verfahren nach einem der Ansprüche 1 bis 5, dadurch gekennzeichnet, daß man auf das im wesentlichen kugelförmige Element (2) eine Krafft aufbringt, die ausreicht, um dieses etwas zu quetschen und es derart zu positionieren, daß sein geometrischer Mittelpunkt in der durch die Mitte der Dicke der Münzplatte (1) gehenden Mittelebene liegt, welches im wesentlichen kugelförmige Element (2) danach gequetscht wird, um das Loch (6) der Münzplatte (1) im wesentlichen vollständig auszufüllen.

7. Verfahren nach einem der Ansprüche 1 bis 6, dadurch gekennzeichnet, daß die Münzplatte (1) mit ihrem Einsatz (2) nach dem Quetschen des im wesentlichen kugelförmigen Elements (2) zwecks Verfestigung der Zusammenfügung Münzplatte (1)-Einsatz (2) einer Diffusionswärmebehandlung unterzogen wird.

8. Maschine zur Herstellung von metallischen Münzplatten mit Einsatz, umfassend :
Mittel (4) zur Zuführung von metallischen Münzplatten (1) mit mindestens einem Loch (6) ;
Mittel (8) zur Einführung eines Metalleinsatzes (2) geeigneter Abmessungen mit anderen Kennzeichen als die Münzplatte, insbesondere anderen ferromagnetischen Kennzeichen, oder einer unterschiedlichen Färbung, in jedes Loch, und Mittel (10) zum festen Verbinden des in das Loch eingeführten Metalleinsatzes mit der Münzplatte, umfassend Quetschmittel (70, 72) zur Quetschung des Elements, vorzugsweise durch Schlagen, sodaß das so gequetschte Element mit der Münzplatte verbunden wird und das Volumen des Lochs im wesentlichen vollkommen ausfüllt, dadurch gekennzeichnet, daß der Metalleinsatz aus einem im wesentlichen kugelförmigen Element, wie einer Kugel, besteht, während das Loch vorteilhafterweise im wesentlichen zylindrisch ist.

9. Maschine nach Anspruch 8, dadurch gekennzeichnet, daß die Mittel (8) zum Zuführen der Einsätze Mittel (30) zur Verteilung eines Einsatzes (2) nach dem anderen durch eine in Überdeckung mit dem Loch (6) der Münzplatte (1) angeordnete Verteileröffnung (34) umfassen.

10. Maschine nach Anspruch 9, dadurch gekennzeichnet, daß die Verteilermittel (30) einen zwischen zwei Endpositionen horizontal veschiebbar montierten Schlitten (36) umfassen, wobei eine erste, vorgeschobene Endposition (Fig. 3) die Verteilung eines Einsatzes (2) untersagt und eine zweite, eingezogene Endposition (Fig. 5) die Öffnung (34), die sich unterhalb der Ebene des Schlittens (36) befindet, freigibt, indem sie vorzugsweise durch eine als Auflage- und Führungsebene des Schlittens (36) dienende Platte (38) festgelegt ist; wobei sich die Münzplatte (1) unterhalb der Platte (38) befindet.

11. Maschine nach Anspruch 10, dadurch gekennzeichnet, daß die Vorderfront (36a) des Schlittens (36) als Feststellanschlag des Vorschubs der Einsätze (2), von denen sich die ersten im wesentlichen in der Verschiebeachse des Schlittens (36) befinden, dient.

12. Maschine nach einem der Ansprüche 8 bis 11, dadurch gekennzeichnet, daß die Mittel (8) zur Zuführung der Einsätze (2) Mittel (60) zum Blockieren des nachfolgenden Einsatzes (2a) in seiner Position umfassen.

13. Maschine nach Anspruch 12, dadurch gekennzeichnet, daß die Blockiermittel (60) einen von einer nockenbildenden Einrichtung (66) betätigten Stift (62) umfassen, der am nachfolgenden Einsatz (2a) in Anlage kommt.

14. Maschine nach einem der Ansprüche 10 bis 13, dadurch gekennzeichnet, daß sie Mittel (48) zum Vorklemmen des Einsatzes (2) nach seiner Verteilung, wenn sich der Schlitten (36) in seiner zweiten, eingezogegen Position befindet, umfaßt (Fig. 5).

15. Maschine nach Anspruch 14, dadurch gekennzeichnet, daß die Mittel (48) zum Vorklemmen einen Stift (50) umfassen, der von einer Trageinrichtung (52, 54) gehaltert ist, welche derart in vertikale Hin- und Herbewegung versetzt ist, daß der Stift (50) durch die Verteileröffnung (34) des Einsatzes geleitet wird.

16. Maschine nach Anspruch 15, dadurch gekennzeichnet, daß die Mittel (48) zum Vorklemmen nockenbildende Mittel (46) umfassen, die beim Abwärtsbewegen der Trageinrichtung (52, 54) auf den Schlitten (36) wirken, um ihn in die zweite, eingezogene Position zu bringen (Fig. 5) und den Schlitten (36) beim Wiederaufwärtsbewegen freizugeben (Fig. 3).

17. Maschine nach einem der Ansprüche 8 bis 16, dadurch gekennzeichnet, daß sie eine Mehrzahl von Aufnahme- und Halterungsmitteln (22) für die Münzplatten (1) umfaßt, die in einem geschlossenen Kreis nacheinander von einer Verteilerposition (5) für Münzplatten (1) zu einer Verteilerposition (7) für Einsätze (2), zu einer Klemmposition (9) und schließlich zu einer Position zur Abgabe der Münzplatten mit eingeklemmten Einsätzen (2) bewegt werden, wobei die Mittel (22) vorzugsweise Teil eines an einer vertikalen Achse (26) rotationsgelagerten Gehäuses ist.

## Claims

1. Method for the production of metal coin blanks with insert, comprising the steps of :

making at least one hole (6) in a metal coin blank (1) ;

feeding a metal insert (2) of suitable dimensions exhibiting physical characteristics different from said blank (1), particularly different ferromagnetic characteristics, or a different color, in each hole (6) ; and

crushing said insert (2) preferably by stamping operation, so that said insert is joined to said blank (1) and fills substantially completely the volume of said hole (6), characterized in that an essentially spherical element is used as metal insert (2).

2. Method according to claim 1, characterized in that the essentially spherical (2) is a ball of which the diameter is between about 1.4 and about 1.6 times the thickness of the blank (1).

3. Method according to claim 1 or 2, characterized in that the diameter of the ball is substantially equal to 1.5 times the thickness of the blank (1).

4. Method according to any one of claims 1 to 3, characterized in that a single central through hole (6) is provided in said blank (1).

5. Method according to any one of claims 1 to 4, characterized in that the diameter of the essentially spherical is slightly greater than the diameter of the hole (6) of the blank (1), preferably greater by only a few μms to about a few tens of μms than the diameter of the hole (6), and is advantageously greater by about 10 to about 20 µms than the diameter of the hole (6).

6. Method according to any one of claims 1 to 5, characterized in that sufficient force is applied on the essentially spherical element (2) to crush it slightly and to position it so that its geometrical center is in the median plane passing through the middle of the thickness of the blank (1), the essentially spherical element (2) being thereafter crushed in order to fill substantially completely the hole (6) of the blank (1).

7. Method according to any one of claims 1 to 6, characterized in that, after the crushing of the essentially spherical element (2), the blank (1) is subjected with its insert (2) to a thermal diffusion treatment consolidating the blank (1)-insert assembly (2).

8. Machine for producing metal coin blanks with insert, comprising :

    means (4) for feeding the metal coin blanks (1) comprising at least one hole (6) ;

    means (8) for feeding a metal insert (2) of suitable dimensions and exhibiting characteristics different from the blank, particularly different ferromagnetic characteristics, or a different color, in each hole, and

    means (10) for joining the insert fed into the hole with said blank, comprising crushing means (70, 72) for crushing the element, preferably by stamping, so that the thus crushed element is joined to said blank and fills substantially completely the volume of said hole,

    characterized in that the metal insert is constituted by an essentially spherical member, such as a ball, while said hole is advantageously essentially cylindrical.

9. Machine according to claim 8, characterized in that the means (8) for feeding the inserts comprise means (30) for distributing the inserts (2) one after the other through a distribution orifice (34) located so as to coincide with the hole (6) of the blank (1).

10. Machine according to claim 9, characterized in that the distribution means (30) comprise a carriage (36) mounted for moving, horizontally in translation between two end positions, a first forward end position (figure 3) preventing the distribution of an insert (2) and a second retracted end position (figure 5) uncovering said orifice (34) which is situated under the plane of the carriage (36), being preferably determined by a plate (38) serving as a plane for supporting and guiding the carriage (36) in translation, said blank (1) being situated under the plate (38).

11. Machine according to claim 10, characterized in that the front face (36a) of the carriage (36) serves as a crash stop for stopping the advance of the inserts (2), the first ones of which are substantially situated in the translation axis of the carriage (36).

12. Machine according to any one of claims 8 to 11, characterized in that the means (8) for feeding the inserts (2) comprise means (60) for blocking the next insert (2a) in position.

13. Machine according to claim 12, characterized in that the blocking means (60) comprise a finger (62) which is actuated by a cam-forming device (66) which comes in application against the insert (2a).

14. Machine according to any one of claims 10 to 13, characterized in that it comprises means (48) for presetting the insert (2) after distribution thereof while the carriage (36) is in its second retracted position (figure 5).

15. Machine according to claim 14, characterized in that the presetting means (48) comprise a finger (50) supported by a supporting device (52, 54) actuated so as to move according to a vertical reciprocating movement for causing the finger (50) to pass through the insert distribution orifice (35).

16. Machine according to claim 15, characterized in that the presetting means (48) comprise cam-forming means (46), said means actuating the carriage (36) during the downward movement of the supporting means (52, 54), so as to bring said carriage in the second retracted position (figure 5) and to release the carriage (36) during the upward movement (figure 3).

17. Machine according to any one of claims 8 to 16, characterized in that it comprises a plurality of means (22) for receiving and holding the blanks (1), moving according to a closed circuit, successively from a distribution station (5) distributing the blanks (1) to a distribution station (7) distributing the inserts (2), to a presetting station (9) and finally to a station for removing the blanks with the set inserts (2), the means (22) are preferably part of a barrel (24) mounted for rotation according to a vertical axis (26).

Fig.1

EP 0 280 615 B1

Fig-7

Fig-2

Fig-3

Fig-4

**Fig-5**

**Fig-6**